# EUROPÄISCHE PATENTSCHRIFT

(11) **EP 0 463 565 B1**
(45) Veröffentlichungstag und Bekanntmachung des Hinweises auf die Patenterteilung: **17.08.1994**
(21) Anmeldenummer: 91110133.5
(22) Anmeldetag: 20.06.1991
(51) Int. Cl.: G02B 23/10

(54) **Vorrichtung zur Darstellung einer Zielmarke**
Recticle display device
Dispositif pour la visualisation d'un réticule

(30) Priorität: 25.06.1990 DE 4020150
(43) Veröffentlichungstag der Anmeldung: 02.01.1992
(73) Patentinhaber: Leica AG, CH-9435 Heerbrugg (CH)
(72) Erfinder: Brun, Robert, Dr., CH-8057 Zürich (CH)

(56) Entgegenhaltungen:
- DE-A- 3 247 261
- GB-A- 2 119 125

## Beschreibung

Die Erfindung betrifft eine Vorrichtung zur Darstellung einer Zielmarke gemäß des Oberbegriffs des Anspruchs 1.

Aus der DE-OS 33 19 392 ist ein optisches Visier, insbesondere für Rohrwaffen, mit darin sichtbarer Zielmarke zur Vorhalt- und/oder Aufsatzmarkierung bekannt, die mittels Leuchtdioden erzeugt und in den Visierstrahlengang optisch eingeblendet ist. Die temperaturunempfindliche und standfeste Anzeige kann unmittelbar von einem Rechner gesteuert werden und soll eine ausreichende Helligkeit aufweisen, sodaß sie für Tag- und Nachtbetrieb geeignet ist. Dazu ist an jeder der matrixartig reihen- und spaltenweise angeordneten Leuchtdioden jeweils ein Lichtleiter angekoppelt, dessen Durchmesser zumindest an der Lichtaustrittsstelle wesentlich kleiner als die Leuchtdiodenabmessungen ist. Die Lichtaustrittsflächen sind räumlich nebeneinander angeordnet und mit einer Einspiegelungsoptik zum gemeinsamen Einspiegeln in den Visierstrahlengang verbunden. Um eine hohe Auflösung zu erhalten, ist eine große Anzahl von Lichtquellen und Lichtleitern mit entsprechendem Montageaufwand erforderlich.

Aus der GB-A 2119 125 ist ein optisches Zielgerät mit einem Objektiv, zwei Prismenanordnungen und einem Okular sowie einer Zielmarke bekannt, die dem zu beobachtenden Bild überlagert ist und gewöhnlich in der Mitte des Bildfeldes liegt. In dieser bekannten Vorrichtung wird ein Mittelwert der Helligkeit des gesamten Zielgebietes gebildet, und es wird die Helligkeit der Zielmarke damit verglichen und entsprechend gesteuert. Eine Berücksichtigung der unmittelbaren Umgebung der Zielmarke, d. h. des Kontrasts zwischen dieser und dem Hintergrund, ist ebensowenig vorgesehen wie eine Steuerung der Zielmarke zur Anzeige des ballistischen Haltepunkts.

Der Erfindung liegt die Aufgabe zugrunde, eine Vorrichtung zur Darstellung einer Zielmarke der eingangs genannten Art zu schaffen, bei der einerseits die Justierung der Zielmarke relativ zur optischen Achse des Zielgerätes unter allen Bedingungen erhalten bleibt und sowohl Aufsatz als auch Seitenvorhalt gleichzeitig darstellbar sind, und bei der andererseits die Zielmarke auch gegenüber einem inhomogenen oder wechselnden Hintergrund stets gut sichtbar ist.

Diese Aufgabe wird erfindungsgemäß durch die kennzeichnenden Merkmale des Anspruchs 1 gelöst. Vorteilhafte Ausgestaltungen und Weiterbildungen der Erfindung ergeben sich aus den Unteransprüchen.

Die durch die Erfindung erreichten Vorteile bestehen im wesentlichen darin, daß nur eine aktive Lichtquelle erforderlich ist, die zudem nicht miniaturisiert sein muß, daß die hohen Anforderungen an Ortsauflösung und Anzahl von Bildpunkten an eine passive Photosensor-Matrix übertragen werden, die in vielen Formen und Größen einfacher als aktive Leuchtdioden-Matrizen verfügbar ist, daß außerdem durch den Soll/Ist-Vergleich eine einmal gewählte Justierung der Zielmarke relativ zur optischen Achse des Zielgerätes beibehalten wird, auch wenn sich im Einsatz die Temperatur zeitlich ändert und einzelne Bauteile alterungsbedingte Änderungen erfahren, und schließlich, daß die Zielmarke jederzeit kontrastreich sichtbar ist.

Das Bewegen der Zielmarke zur gleichzeitigen Darstellung von Aufsatz und Seitenvorhalt erfordert die Ablenkung des von der Lichtquelle ausgehenden Strahlenbündels in zwei Richtungen. In vorteilhafter Weiterbildung der Erfindung kann dies durch Kippen der Abbildungsoptik oder der Lichtquelle, durch Verschieben der letzteren oder durch Drehen von zwei Keilen erfolgen.

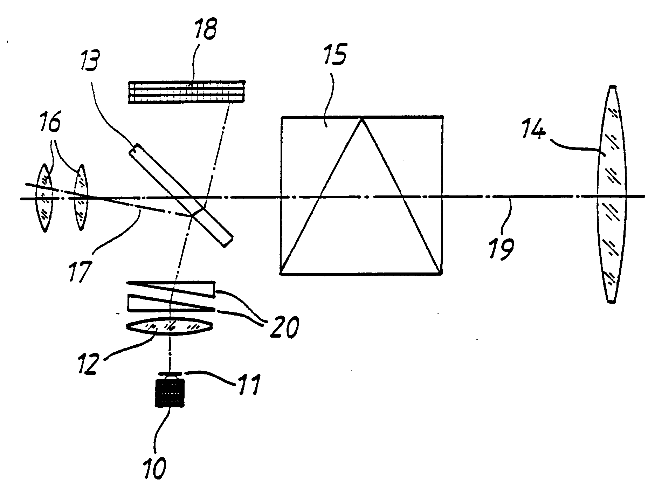

Weitere Einzelheiten der Erfindung gehen aus der nachfolgenden Beschreibung eines schematisch in der Zeichnung dargestellten Ausführungsbeispiels hervor. Dabei wurde auf die Wiedergabe bekannter oder zum Verständnis der Erfindung nicht erforderlicher Bauteile verzichtet.

Eine Lichtquelle 10, beispielsweise eine LED, erzeugt eine Zielmarke 11 in Form eines Punktes. Es versteht sich, daß mittels einer Marke auch andere Formen wie ein Ring oder ein Kreuz darstellbar sind. Das von der Lichtquelle 10 ausgehende Licht wird von einer Abbildungsoptik 12 erfaßt und über einen Strahlenteiler 13 in den optischen Strahlengang des Zielgerätes eingespiegelt. Letzteres besteht aus einem Teleskop mit einem Objektiv 14, einem Umkehrprisma 15 und einem Okular 16. Das Bild der Zielmarke 11 liegt in der Ebene des Zwischenbildes 17 des Teleskops und wird mittels des Okulars 16 zusammen mit der Szene betrachtet, welche durch das Objektiv 14 abgebildet wird.

Der vom Strahlenteiler 13 durchgelassene Anteil des Lichtes von der Zielmarke 11 trifft auf eine mit dem Teleskop und einem hier nicht gezeigten Gehäuse stabil verbundene, zweidimensionale Photosensor-Matrix 18, wodurch die tatsächliche Position der Zielmarke 11 relativ zur optischen Achse 19 des Gerätes bestimmt ist; wird eine Ablage von den Soll-Koordinaten festgestellt, kann ein hier nicht dargestellter Rechner die Vorrichtung entsprechend nachsteuern. Damit ist gewährleistet, daß die Justierung der Zielmarke 11 relativ zur optischen Achse 19 des Zielgerätes unter allen Bedingungen, insbesondere bei wechselnden Termperaturen und alterungsbedingten Veränderungen der Bauteile, erhalten bleibt.

Das Bewegen der Zielmarke 11 erfordert die Ablenkung des von der Lichtquelle 10 ausgehenden Strahlenbündels in zwei Richtungen. Dies kann in vorteilhafter Weise durch einfaches Kippen der Abbildungsoptik 12, beispielsweise mittels piëzoelektrischer Stellglieder, um zwei orthogonale Achsen, erfolgen. Auch ein laterales Verschieben der Lichtquelle 10 kann zur Bewegung der Zielmarke 11 dienen. Gemäß einer weiteren, vorteilhaften Ausgestaltung kann die Abbildungsoptik 12 fest montiert sein, und zwischen dieser und dem Strahlenteiler 13 können Drehkeile 20 zur Ablenkung des Strahlenbündels angeordnet sein. Die Bewegung der Drehkeile 20 kann in an sich bekannter Weise mittels elektrischer Stellmotoren erfolgen.

Ferner nimmt der Rechner, der Bestandteil des Zielgerätes ist, die Signale der Photosensor-Matrix 18 auf und ermittelt aus der Gesamtheit der Bildelemente diejenigen, welche die Soll-Position der Zielmarke 11 umgeben. Die Intensität der Signale der Photosensor-Matrix 18 ist ein Maß für die Helligkeit des Szenenhintergrundes am Bildort der Zielmarke 11 und in ihrer Umgebung. Entsprechend diesen Helligkeitswerten steuert der Rechner die Intensität der Lichtquelle 10, sodaß die Zielmarke 11 jeweils kontrastreich gegenüber ihrem momentanen Hintergrund erscheint.

## Patentansprüche

1. Vorrichtung zur Darstellung einer Zielmarke innerhalb eines optischen Zielgeräts, mit einer die Zielmarke erzeugenden Lichtquelle (10), einer das von derselben ausgehende Strahlenbündel erfassenden Abbildungsoptik (12) und einem Strahlenteiler (13), der den einen Teil des Strahlenbündels in einen Visierstrahlengang (19) einspiegelt und den anderen Teil auf einen Photosensor (18) lenkt, dadurch gekennzeichnet, daß als Photosensor eine zweidimensionale Photosensor-Matrix (18) vorgesehen ist, aus deren Signalen die Ist-Position der Zielmarke (11) ermittelbar ist, daß aus dem Vergleich mit der von einem Ballistikrechner vorgegebenen Soll-Position Steuersignale zur kontinuierlichen Bewegung der Zielmarke (11) durch Ablenkung des Strahlenbündels in zwei Richtungen erzeugbar sind, die dem mittels des Ballistikrechners ermittelten Aufsatz- und Vorhaltewinkel relativ zur optischen Achse des Visierstrahlenganges (19) gleichzeitig entsprechen, und daß der Kontrast der Zielmarke (11) gegenüber der unmittelbaren Umgebung mittels Signalen der Photosensor-Matrix (18) steuerbar ist.

2. Vorrichtung nach Anspruch 1, dadurch gekennzeichnet, daß die Bewegung der Zielmarke (11) durch Kippen der Abbildungsoptik (12) um zwei voneinander unabhängige Achsen erfolgt.

3. Vorrichtung nach Anspruch 1, dadurch gekennzeichnet, daß die Bewegung der Zielmarke (11) durch Kippen oder Verschieben der Lichtquelle (10) in zwei voneinander unabhängige Richtungen erfolgt.

4. Vorrichtung nach Anspruch 1, dadurch gekennzeichnet, daß die Bewegung der Zielmarke durch Drehen von zwei Keilen (20) um die optische Achse (19) erfolgt.

## Claims

1. Device for displaying a sighting mark within an optical sighting instrument, with a light source (10) producing the sighting mark, an optical imaging system (12) detecting the light beam emanating therefrom and a beam splitter (13), which reflects the one part of the light beam into a sighting ray path (19) and steers the other part to a photosensor (18), characterised thereby, that a two-dimensional photosensor matrix (18) is provided as photosensor, from the signals of which the actual position of the sighting mark (11) is ascertainable, that control signals for the continuous movement of the sighting mark (11) by deflection of the light beam in two directions are producible from the comparison with the intended position preset by a ballistic computer, which two directions at the same time correspond with the angles of elevation and lead, which were ascertained by the ballistics computer, relative to the optical axis of the sighting ray path (19), and that the contrast of the sighting mark (11) against the immediate environment is controllable by means of signals of the photosensor matrix (18).

2. Device according to claim 1, characterised thereby, that the movement of the sighting mark (11) takes place through tilting of the optical imaging system about two mutually independent axes.

3. Device according to claim 1, characterised thereby, that the movement of the sighting mark (11) takes place through tilting or displacing the light source (10) in two mutually independent directions.

4. Device according to claim 1, characterised thereby, that the movement of the sighting mark (11) takes place through rotation of two wedges (20) about the optical axis (19).

## Revendications

1. Dispositif pour représenter un repère de visée à l'intérieur d'un appareil de visée optique, avec une source de lumière (10) produisant le repère de visée, une optique de reproduction (12) captant le faisceau de rayons partant de celle-ci et un diviseur de rayons (13) qui introduit par miroir une partie du faisceau de rayons dans un trajet de rayons de visée (19) et qui guide l'autre partie vers un photodétecteur (18), caractérisé en ce qu'il est prévu comme photodétecteur une matrice de photodétection bidimensionnelle (18) à partir des signaux de laquelle peut être déterminée la position réelle du repère de visée (11), qu'à partir de la comparaison avec la position de consigne prédéfinie par un calculateur ballistique, des signaux de commande pour le déplacement continu du repère de visée (11) peuvent être produits en faisant dévier le faisceau de rayons dans deux directions, qui correspondent simultanément à l'angle de lunette de visée et de déviation déterminé au moyen du calculateur ballistique relativement à l'axe optique du trajet de rayons de visée (19), et que le contraste du repère de visée (11) par rapport à l'environnement immédiat peut être commandé au moyen de signaux de la matrice de photodétection (18).

2. Dispositif selon la revendication 1, caractérisé en ce que le déplacement du repère de visée (11) est exécuté par un basculement de l'optique de reproduction (12) autour de deux axes indépendants l'un de l'autre.

3. Dispositif selon la revendication 1, caractérisé en ce que le déplacement du repère de visée (11) est exécuté par basculement ou déplacement de la source de lumière (10) dans deux directions indépendantes l'une de l'autre.

4. Dispositif selon la revendication 1, caractérisé en ce que le déplacement du repère de visée est exécuté en faisant tourner deux coins (20) autour de l'axe optique (19).
